# EUROPÄISCHE PATENTSCHRIFT

(11) **EP 2 516 906 B1**
(45) Veröffentlichungstag und Bekanntmachung des Hinweises auf die Patenterteilung: **04.09.2013**
(21) Anmeldenummer: 10788246.6
(22) Anmeldetag: 27.11.2010
(51) Int. Cl.: F16K 31/06, H01F 7/08

(54) **ELEKTROMAGNETVENTIL**
ELECTROMAGNETIC VALVE
VANNE ÉLECTROMAGNÉTIQUE

(30) Priorität: 21.12.2009 DE 102009060031
(43) Veröffentlichungstag der Anmeldung: 31.10.2012
(73) Patentinhaber: Robert Bosch GmbH, 70442 Stuttgart (DE)
(72) Erfinder: SCHEMPP, Roland, 97753 Karlstadt (DE); WALTER, Christian, 07646 Tautendorf (DE)
(74) Vertreter: Thürer, Andreas
(86) Internationale Anmeldenummer: PCT/EP2010/007208
(87) Internationale Veröffentlichungsnummer: WO 2011/082740

(56) Entgegenhaltungen:
- DE-U1- 29 905 883
- US-A1- 2005 189 512

## Beschreibung

Die Erfindung betrifft ein Magnetventil gemäß dem Oberbegriff des Patentanspruchs 1.

In der DE 10 2004 009 460 A1 ist ein derartiges Magnetventil offenbart. Dieses hat ein Ventilgehäuse mit einem darin geführten Ventilschieber zum Steuern von Druckmittelverbindungen. Der Ventilschieber wird dabei von einem Hubmagneten betätigt. Dieser hat eine ringförmige bzw. rohrförmige in einen Magnettopf aufgenommene Spule, wobei der Magnettopf dabei von dem Ventilschieber durchsetzt ist. Die Spule ist etwa koaxial zum Ventilschieber angeordnet und umgreift diesen. Über einen aus dem Magnettopf auskragenden Endabschnitt ist der Ventilschieber mit einem Magnetanker fest verbunden. Zum Verschieben des Ventilschiebers wird der Magnetanker über die Spule mit einer Magnetkraft beaufschlagt, wodurch sich dieser in Richtung des Magnettopfs bewegt, bis eine zum Ventilschieber weisende Ringstirnfläche des Magnetankers an einer Ringstirnfläche des Magnettopfs anliegt.

In der EP 1 088 182 B1 ist ein weiteres Magnetventil dargestellt. Hierbei ist anstelle eines Ventilschiebers ein über einen Hubmagneten betätigbarer Ventilstößel vorgesehen, der bei Betätigung eine auf einem Ventilsitz angeordnete Ventilkugel freigibt. Der Hubmagnet weist eine einen länglichen Polkern umgreifende Spule auf. Der Polkern ist dabei von dem Ventilstößel durchsetzt, der an beiden Enden des Polkerns auskragt. Über einen ersten Endabschnitt des Ventilstößels ist die Ventilkugel mit einer Schließkraft beaufschlagbar. An einem zweiten Endabschnitt ist der Ventilstößel mit einem Flachanker fest verbunden. Dieser wird bei einer Bestromung der Spule von dieser wegbewegt, wodurch eine durch den Ventilstößel auf die Ventilkugel wirkende Schließkraft abgebaut wird.

DE-U-299 05883 zeigt die Merkmale des Oberbegriffs des Ansprunchs 1.

Diese vorstehend erläuterten Lösungen haben den Nachteil, dass das Magnetventil vorrichtungstechnisch aufwändig ausgestaltet ist und vergleichsweise langsam schaltet.

Demgegenüber liegt der Erfindung die Aufgabe zugrunde, ein Magnetventil zu schaffen, das vergleichsweise schnell schaltet und mit geringem Aufwand herstellbar ist.

Diese Aufgabe wird gelöst durch ein Magnetventil mit den Merkmalen des Patentanspruchs 1.

Erfindungsgemäß hat ein Magnetventil ein Ventilgehäuse, in dem ein Ventilkörper, insbesondere ein Ventilschieber oder ein Ventilstößel, zum Steuern zumindest einer Druckmittelverbindung axial verschiebbar geführt ist. Der Ventilkörper ist dabei mit einem Anker, insbesondere einem Flachanker, verbunden. Gegenüberliegend von einer Stirnseite des Ankers ist ein Hubmagnet mit einem eine Spule aufweisenden Magnettopf zum Beaufschlagen des Ankers mit einer Magnetkraft angeordnet. Wenigstens ein zumindest abschnittweise ringförmiges Element ist auf Seiten der dem Anker zuweisenden Stirnseite des Magnettopfs zum Bündeln eines auf den Anker zur Betätigung wirkenden Magnetflusses angeordnet.

Diese Lösung hat den Vorteil, dass die auf den Anker wirksame Magnetkraft, insbesondere in Verschieberichtung, mit geringem vorrichtungstechnischem Aufwand erhöht ist. Die hohe Magnetkraft führt zu einer höheren Beschleunigung des Ankers, wodurch das Magnetventil vergleichsweise schnell schaltbar ist.

Vorzugsweise ist das zumindest abschnittsweise ringförmige Element einfach ein etwa koaxial zum Anker angeordneter Polring.

Mit Vorteil ist ein Außendurchmesser des Ankers geringer als ein Innendurchmesser des Polrings, wodurch der Anker bei einer Hubbewegung in Richtung des Magnettopfs zumindest abschnittsweise in den Polring eintauchbar ist. Durch das Eintauchen des Ankers in den Polring steigen bei einer Hubbewegung des Ankers die auf ihn wirkenden radialen Magnetkräfte an, während die über den Polring axial auf ihn wirkenden Magnetkräfte verringert werden. Eine Beschleunigung des Ankers etwa am Ende seiner Hubbewegung wird hierdurch verringert, womit die Auftreffgeschwindigkeit und -kraft des Ankers beispielsweise auf einen Anschlag gesenkt und ein Verschleiß des Ankers vermindert ist.

In vorteilhafter Weiterbildung der Erfindung hat der Polring eine im Wesentlichen kreiszylindrische Innenmantelfläche und zwei dazu etwa senkrecht angeordnete Ringflächen, wobei die vom Magnettopf abweisende Ringfläche des Polrings und eine dem Magnettopf zuweisende Stirnfläche des Ankers in einer Grundstellung des Ankers etwa in einer gemeinsamen Ebene liegen. Hierdurch liegt eine umlaufende Ankerkante des Ankers zwischen dessen Stirnfläche und seiner Umfangsfläche einer Ringkante des Polrings gegenüberliegen, wodurch eine starke Bündelung des Magnetflusses zwischen den Kanten in Axial- und Radialrichtung erfolgt und somit große Magnetkräfte auf den Anker wirken. Durch die hohen Magnetkräfte in dieser Grundstellung erfährt der Anker zusammen mit dem Ventilkörper bei einem Schaltvorgang des Magnetventils eine große Anfangsbeschleunigung in Richtung des Magnettopfs.

Die dem Hubmagnet gegenüberliegende Stirnseite des Ankers kann vom Ventilkörper abweisend angeordnet sein, wodurch der Magnettopf im Vergleich zum Stand der Technik, vorrichtungstechnisch einfach nicht von dem Ventilkörper durchsetzt ist.

Der Polring kann einstückig als Radialvorsprung in einer den Hubmagneten und den Anker aufnehmenden Gehäuseaussparung in dem Ventilgehäuse ausgebildet sein. Dies ist äußerst kostengünstig herstellbar, da beispielsweise eine Ventilschieberbohrung, als Führungsfläche von Ventilkörper und Anker, und die Innenmantelfläche des Polrings in einer gemeinsamen Aufspannung gefertigt werden können. Dies verbessert die Konzentrizität zwischen Anker und Polring, was zu einer deutlichen Reduzierung der Querkräfte führt.

Bei einer einstückigen Ausführung des Polrings in dem Ventilgehäuse besteht das Ventilgehäuse aus einem ferromagnetischen Material.

In einer weiteren bevorzugten Ausführungsform der Erfindung ist der Polring in eine den Hubmagneten und den Anker aufnehmenden Gehäusebohrung des Ventilgehäuses zwischen einem Gehäuseboden und einer Stirnseite des Magnettopfs angeordnet. Das Ventilgehäuse besteht in diesem Fall vorzugsweise aus einem nicht ferromagnetischen Material.

Vorrichtungstechnisch mit geringem Aufwand kann der Polring unmittelbar am Gehäuseboden eines nichtferromagnetischen Gehäuses oder mittelbar an diesem über ein sich am Gehäuseboden abstützendes nichtferromagnetisches Ringelement angeordnet sein, wobei der Magnettopf sich wiederum mit einer zum Anker weisenden Stirnseite an dem Polring abstützt.

Bei einer anderen vorteilhaften Ausgestaltung der Erfindung ist der Polring als Topfvorsprung an der zum Anker weisende Stirnseite des Magnettopfs ausgebildet.

Zur einfachen Fixierung des Magnettopfs ist dieser auf seiner vom Anker abweisenden Stirnseite mit einer Federkraft einer sich an einem Gehäusedeckel abstützenden Feder etwa in seiner Längsrichtung hin zum Anker beaufschlagt.

Vorteilhafte Weiterbildungen der Erfindung sind Gegenstand weiterer Unteransprüche.

Im Folgenden werden bevorzugte Ausführungen der Erfindung anhand schematischer Figuren näher erläutert. Es zeigen:
Figur 1 in einer Längsschnittansicht einen Ausschnitt eines Magnetventils gemäß einem ersten Ausführungsbeispiel;
Figur 2 einen vergrößerten Ausschnitt des Magnetventils aus der Figur 1;
Figur 3 in einer Längsschnittansicht einen Ausschnitt des Magnetventils gemäß einem zweiten Ausführungsbeispiel;
Figur 4 in einer Längsschnittansicht einen Ausschnitt des Magnetventils gemäß einem dritten Ausführungsbeispiel; und
Figur 5 in einer Längsschnittansicht ein Magnetventil gemäß einem vierten Ausführungsbeispiel.

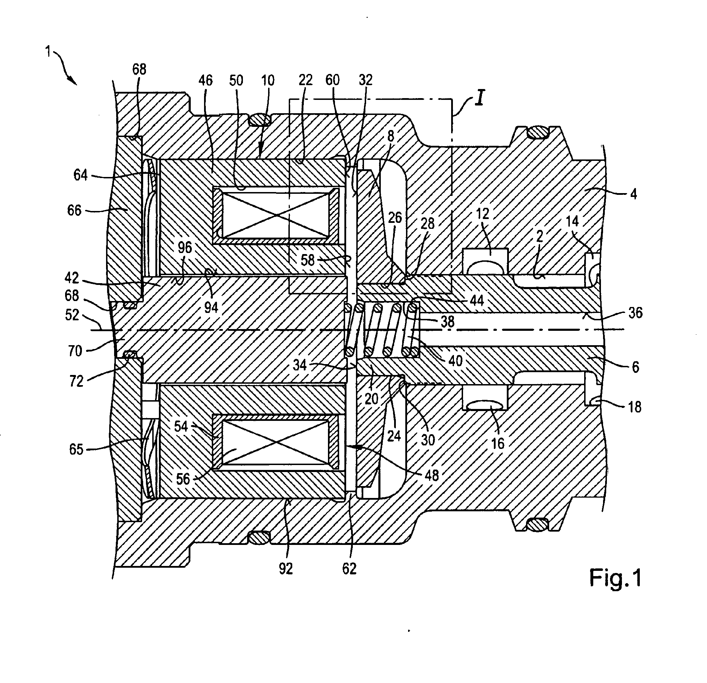

Figur 1 stellt in einer Längsschnittansicht einen Ausschnitt eines Magnetventils 1 gemäß einem ersten Ausführungsbeispiel dar. Dieses hat einen in einer Ventilbohrung 2 eines Ventilgehäuses 4 gleitend geführten Ventilschieber 6. Dieser ist über einen Flachanker 8 von einem Hubmagneten 10 betätigbar. Das Ventilgehäuse 4 ist patronenförmig ausgebildet und ist beispielsweise in eine Stufenbohrung eines nicht dargestellten Steuerblocks eingesetzt. Über den Ventilschieber 6 ist zumindest eine Druckmittelverbindung steuerbar, wobei in der Figur 1 dies beispielsweise eine Druckmittelverbindung zwischen zwei radial in die Ventilbohrung 2 eingebrachte und in Längsrichtung zueinander beabstandete Steuerkammern 12 und 14 ist. Diese sind jeweils über eine Sternbohrung 16 bzw. 18 mit Druckmittelkanälen des nicht dargestellten Steuerblocks verbunden.

Ein Endabschnitt 20 des Ventilschiebers 6 kragt in eine radial im Vergleich zur Ventilbohrung 2 erweiterte etwa kreiszylindrische Gehäuseaussparung 22 des Ventilgehäuses 4 aus. Der Endabschnitt 20 des Ventilschiebers 6 ist radial zurückgestuft, wodurch eine Aufnahmestufe 24 für den Flachanker 8 geschaffen ist. Dieser ist dabei mit einer Durchgangsbohrung 26 fest, beispielsweise durch eine Presspassung, auf die Aufnahmestufe 24 etwa koaxial zum Ventilschieber 6 angeordnet. Mit einer Ringstirnfläche 28 liegt der Flachanker 8 dann an einer Ringfläche 30 der Aufnahmestufe 24 etwa an. Eine dem Hubmagneten 10 zuweisende Stirnfläche 32 des Flachankers 8 liegt dabei etwa in der gleichen Ebene wie eine Stirnfläche 34 des Ventilschiebers 6, wobei sich die Ebene etwa senkrecht zur Zeichenebene in der Figur 1 erstreckt.

Der Ventilschieber 6 hat eine mit einem Leckageanschluss des nicht dargestellten Steuerblocks in Längsrichtung koaxial zu diesem eingebrachte Durchgangsbohrung 36. Eine weitere einen größeren Durchmesser als die Durchgangsbohrung 36 aufweisende Aufnahmebohrung 38 ist von der Stirnfläche 34 des Ventilschiebers 6 etwa koaxial zu diesem eingebracht und dient als Aufnahme für eine Druckfeder 40. Dieses stützt sich an einem den Hubmagneten 10 axial durchsetzenden Anschlagstift 42 ab und beaufschlagt den Ventilschieber 6 über eine durch die Durchgangsbohrung 36 und die Aufnahmebohrung 38 gebildete Ringfläche 44 mit eine Federkraft in Richtung weg vom Hubmagneten 10.

Der Hubmagnet 10 hat einen in der Gehäuseaussparung 22 des Ventilgehäuses 4 eingesetzten etwa hohlzylindrischen Magnettopf 46, der den Anschlagstift 42 umgreift. In dem Magnettopf 46 ist von seiner dem Flachanker 8 zuweisenden Stirnseite 48 her eine etwa hohlzylindrische Spulenaufnahme 50 etwa koaxial zur Längsachse 52 des Magnetventils 1 eingebracht. In diese ist eine von einer Kunststoffaufnahme 54 abschnittsweise umgriffene Spule 56 fest eingesetzt. Diese ist über nicht dargestellt Kontaktstifte, die nach links in der Figur 1 aus dem Magnetventil 1 auskragen, elektrisch kontaktierbar.

Durch die etwa hohlzylindrische Spulenaufnahme 50 weist der Magnettopf 46 eine ringförmige innere und eine ringförmige äußere der Stirnfläche 32 des Flachankers 8 zuweisende Polfläche 58 und 60 auf. Mit der äußeren Polfläche 60 liegt der Magnettopf 46 etwa an einen einstückig mit dem Ventilgehäuse 4 ausgebildeten und in die Gehäuseaussparung 22 radial nach innen auskragenden Polring 62 an. Über eine vom Flachanker 8 abweisenden Stirnfläche 64 des Magnettopfs 46 wird dieser über ein Federelement 65, insbesondere eine Wellfederscheibe, die sich an einer in das Ventilgehäuse 4 fest eingesetzten Dichtplatte 66 abstützt gegen den Polring 62 gespannt. Die Dichtplatte 66 ist in eine radial erweiterte Stufe 68 der Gehäuseaussparung 22 eingesetzt und beispielsweise über eine nicht dargestellte in das Ventilgehäuse 4 eingeschraubte Hohlschraube fixiert. Die Dichtplatte 66 hat eine etwa koaxial zur Längsachse 52 des Magnetventils 1 eingebrachte Aufnahmebohrung 68. In diese ist ein radial vom Anschlagstift 42 zurückgestufter Haltezapfen 70 eingesetzt, der eine Ringnut mit einem O-Ring 72 aufweist, der dichtend zwischen der Ringnut und der Aufnahmebohrung 68 angeordnet ist.

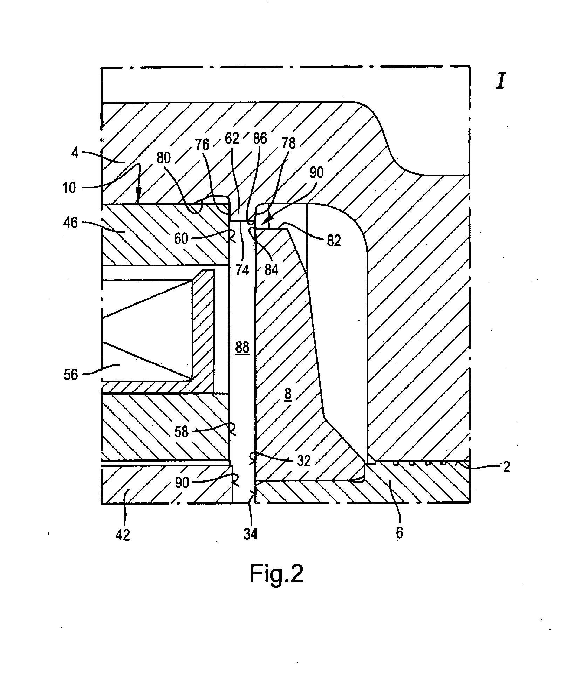

In Figur 2 ist der besseren Darstellbarkeit halber ein vergrößerter Ausschnitt I des Magnetventils 1 aus Figur 1 dargestellt. Der einstückig mit dem Ventilgehäuse 4 ausgebildete Polring 62 hat eine etwa kreiszylindrische Innenmantelfläche 74 und zwei sich etwa senkrecht dazu erstreckende Ringflächen 76, 78. An der in Figur 2 linken Ringfläche 76 des Polrings 62 stützt sich der Magnettopf 46 mit seiner äußeren Polfläche 60 ab. Um eine etwa planare Anlage zwischen der Polfläche 60 des Magnettopfs 46 und der Ringfläche 76 des Polrings 62 zu schaffen, ist von der Ringfläche 76 her ein Freistich 80 radial in das Ventilgehäuse 4 eingebracht. In der in Figur 2 dargestellten Grundstellung des Magnetventils 1 ist der Flachanker 8 etwa rechts von der Ringfläche 78 des Polrings 62 angeordnet. Die Stirnfläche 32 des Flachankers 8 und die Stirnfläche 34 des Ventilschiebers 6 liegen dabei etwa in der gleichen Ebene wie die Ringfläche 78 des Polrings 62.

Der Flachanker 8 hat eine etwa kreiszylindrische Außenmantelfläche 82, wodurch zusammen mit der Stirnfläche 32 eine umlaufende zum Polring 62 weisende Ankerkante 84 ausgebildet ist. Der Polring 62 hat in der Figur 2 eine aus der Innenmantelfläche 74 und der rechten Ringfläche 78 gebildete umlaufende und zum Flachanker 8 weisende Ringkante 86.

Zum Betätigen des Magnetventil 1 aus Figur 1 und somit zum Verschieben des Ventilschiebers 6 zusammen mit dem Flachanker 8 von der gezeigten Grundstellung in eine Schaltstellung, um beispielsweise eine Druckmittelverbindung zwischen den Steuerkammern 12, 14 zu öffnen, wird die Spule 56 des Hubmagneten 10 über die nicht dargestellten Kontakte bestromt. Es bildet sich ein Magnetfluss vom Magnettopf 46 über die äußere Polfläche 60, den Polring 62, die Ringkante 86 und die Ankerkante 84 auf den Flachanker 8 und von diesem über die innere Polfläche 58 zum Magnettopf 46. Durch den Polring 62 wird der Magnetfluss gebündelt und tritt im Wesentlichen über die Ringkante 86 und die Ankerkante 84 zum Flachanker 8 über. Durch die Bündelung des Magnetflusses wird die auf den Flachanker 8 wirkende Magnetkraft in eine Axialrichtung erhöht.

Der über den Polring 62 auf den Anker 8 geleitete Magnetfluss übt auf den Flachanker 8 eine axiale und radiale Magnetkraft aus. Bei einer Hubbewegung des Flachankers 8 in der Figur 2 nach links werden die Innenmantelfläche des Polrings 62 und die Außenmantelfläche 82 des Flachankers 8 in eine axiale Überdeckung gebracht, wodurch die aufgrund des Magnetflusses durch den Polring 62 auf den Flachanker 8 wirkenden Magnetkräfte in Axialrichtung verkleinert und in Radialrichtung erhöht werden.

Bei einer Ausführung ohne den Polring 62, wie in dem eingangs aufgezeigten Stand der Technik, würden radiale Magnetkräfte im Wesentlichen gleich bleiben. Des Weiteren würde ohne den Polring 62 ein axialer Luftspalt 88 zwischen der Stirnfläche 32 des Flachankers 8 und dem Magnettopf 46 eine recht hohen Widerstand für den Magnetfluss darstellen, wodurch die auf den Flachanker 8 wirkenden Magnetkräfte am Hubanfang reduziert wären.

Neben den axialen und radialen Magnetkräften durch den gebündelten Magnetfluss durch den Polring 62, wirken auf den Flachanker 8 axiale Magnetkräfte über den axialen Luftspalt 88 zwischen den inneren und äußeren Polflächen 58, 60 und der Stirnfläche 32 des Flachankers 8. Bei einer Hubbewegung des Flachankers 8 zusammen mit dem Ventilschieber 6 verringert sich der axiale Luftspalt 88, wodurch die über den Luftspalt 88 wirkenden axialen Magnetkräfte steigen.

Durch die bei einer Hubbewegung des Flachankers 8 steigenden radialen Magnetkräfte aufgrund der Überdeckung zwischen der Außenmantelfläche 82 des Flachankers 8 und der Innenmantelfläche 74 des Polrings 62 werden die insgesamt auf den Flachanker 8 wirkenden axialen Magnetkräfte einer Hubbewegung im Vergleich zum Stand der Technik ohne Polring verkleinert. Hierdurch ist eine Auftreffkraft der Stirnfläche 34 des Ventilschiebers 6 und der Stirnfläche 32 des Flachankers 8 auf eine Stirnfläche 90 des Anschlagstifts 42 verringert.

Zwischen der Außenmantelfläche 82 des Flachankers 8 und der Innenmantelfläche 74 des Polrings 62 ist ein radialer Luftspalt 90 bzw. Gleitluftspalt. Zur Vermeidung von unterschiedlichen radialen auf den Flachanker 8 wirkenden Magnetkräften sollte eine umlaufend Dicke des Luftspalts 90 etwa gleich und dieser somit konzentrisch sein. Unterschiede in den radialen Magnetkräften würden zu großen Reibkräften und zum Verkanten des Ventilschiebers 6 in der Ventilbohrung 2 und zu einem erhöhten Verschleiß zwischen dem Ventilschieber 6 und der Ventilbohrung 2 führen. Dies hätte des Weiteren zur Folge, dass die axialen Magnetkräfte zum Verschieben des Ventilschiebers 6 aufgrund hoher Reibung höher sein müssten. Für einen etwa konzentrischen Luftspalt 90 ist erforderlich, dass die Innenmantelfläche 74 des Polrings 62 und die Außenmantelfläche 82 des Flachankers 8 geringe Rundlauftoleranzen aufweisen, und da der Flachanker 8 über den Ventilschieber 6 in der Ventilbohrung 2 geführt ist, ist es auch erforderlich, dass diese geringe Rundlauftoleranzen aufweist. Um dies mit geringen Herstellungskosten zu ermöglichen, kann die Ventilbohrung 2 und die Innenmantelfläche 74 des Polrings 62, die in dem Ventilgehäuse 4 ausgebildet sind, einfach in einer Aufspannung kostengünstig gefertigt werden.

Die in den Figuren 1 und 2 dargestellte Ausführungsform hat den weiteren Vorteil einer sehr einfachen geometrischen Form des Magnettopfs 46 ohne zusätzliche Stufen in den Polflächen 60 und 58. Die Höhentoleranz des Magnettopfs 46 hat keine Auswirkung auf die Toleranzen von Restluftspalt und Ventilhub. Es ergibt sich eine maximale Parallelität des Restluftspalts. Des Weiteren sind zur Ausbildung des Polrings 62, im Gegensatz zu den anderen Ausführungsformen, keine zusätzlichen Einlegeteile erforderlich. Dadurch entfallen zusätzliche Fügespalte, welche die Konzentrizität zwischen Polring 62 und Flachanker 8 negativ beeinflussen.

Der Abschnitt der Gehäuseaussparung 22 des Ventilgehäuses 4 aus Figur 1 in dem der Magnettopf 46 angeordnet ist und eine Außenmantelfläche 92 des Magnettopfs 46 können höhere Toleranzen im Vergleich zur Ventilbohrung 2 und Innenmantelfläche 74 des Polrings 62 aufweisen, da die Rundlauftoleranz des Magnettopfs 46 und der Fügespalt zwischen dem Magnettopf 46 und der Gehäuseaussparung 22 keinen Einfluss auf den radialen Luftspalt 90 haben.

Vorteilhafterweise kann zwischen einer Außenmantelfläche 94 des Anschlagsstifts 42 und einer Innenmantelfläche 96 des Magnettopfs 46 ein umlaufender Spalt sein, wodurch Fertigungskosten aufgrund hoher Fertigungstoleranzen in diesem Bereich gering sind.

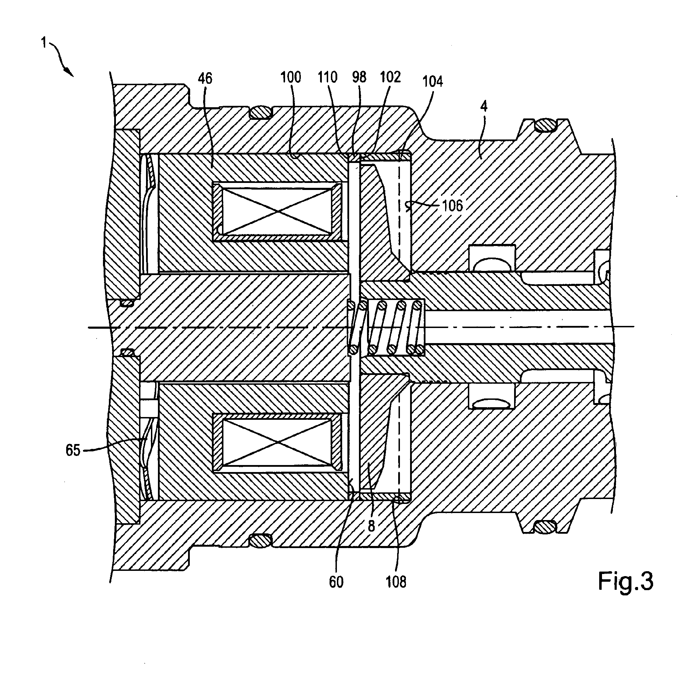

Figur 3 stellt eine Längsschnittansicht des Magnetventils 1 gemäß einem zweiten Ausführungsbeispiel dar. Der Polring 62 aus Figur 1 ist dabei nicht mehr einstückig mit dem Ventilgehäuse 4 ausgebildet, sondern als separater Polring 98 bzw. Einlegering in eine Gehäusebohrung 100 des Ventilgehäuses 4 angeordnet. Der Polring 98 stützt sich mit seiner in der Figur 3 rechten Ringfläche 102 an einem etwa hohlzylindrischen Stützring 104 ab. Dieser wiederum liegt an einem Bohrungsgrund 106 der Gehäusebohrung 100 des Ventilgehäuses 4 an. Ein Innendurchmesser des Stützrings 104 ist etwas größer als ein Innendurchmesser des Polrings 98.

Um ein etwa ebenes Anliegen des Stützrings 104 am Bohrungsgrund 106 zu ermöglichen ist radial vom Bohrungsgrund 106 ein Freistich 108 in das Ventilgehäuse 4 eingebracht. An seiner in der Figur 3 linken Ringfläche 110 des Polrings 98 liegt der Magnettopf 46 mit seiner äußeren Polfläche 60 an. Der Magnettopf 46 wird über das Federelement 65 über den Polring 98 und den Stützring 104 gegen den Bohrungsgrund 106 gespannt. In dieser Ausführungsform des Magnetventils 1 ist es ausreichend, wenn der Polring 98 zum Bündeln des Magnetflusses zwischen dem Magnettopf 46 und dem Flachanker 8 aus einem ferromagnetischen Material besteht und nicht das gesamte Ventilgehäuse 4, wie im ersten Ausführungsbeispiel aus Figur 1.

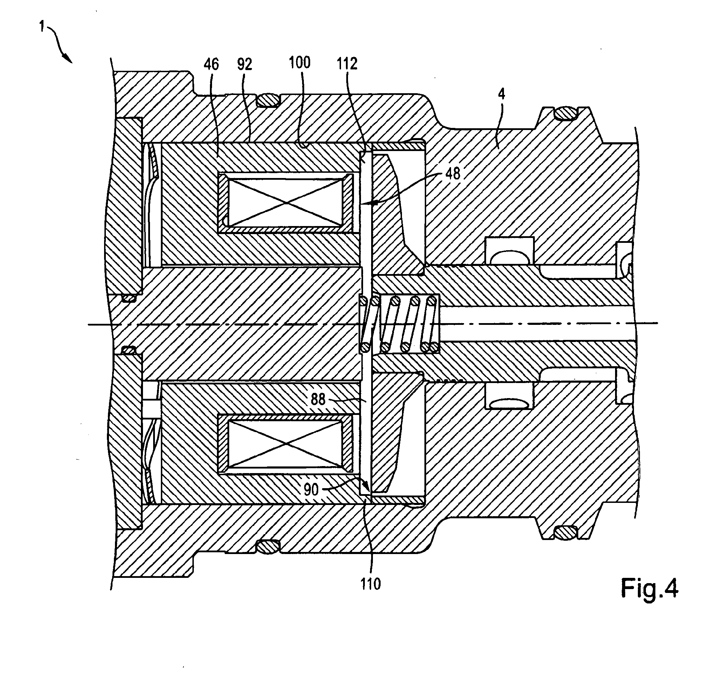

Figur 4 bildet in einer Längsschnittansicht das Magnetventil 1 gemäß einem dritten Ausführungsbeispiel ab. Der Polring 62 aus der Figur 1 ist hierbei nicht einstückig mit dem Ventilgehäuse 4 sondern einstückig als Polring 110 mit dem Magnettopf 46 ausgebildet. Eine axiale Länge des Magnettopfes 46 setzt sich dabei im Wesentlichen aus dem Magnettopf 46 aus Figur 3 und dem Polring 110 zusammen. Bei der Herstellung wird der Magnettopf 46 dann von seiner Stirnseite 48 her axial mit einer kreiszylindrischen Stufe zurückgestuft, deren Innendurchmesser etwa dem Innendurchmesser des Polrings 98 aus Figur 3 entspricht. Die Tiefe der Stufe 112 ist dabei derart gewählt, dass der axiale Luftspalt 88 im Wesentlichen dem aus der Figur 1 und 3 entspricht. Damit eine Breite des radialen Luftspalts 90 zwischen dem Flachanker 8 und dem Polring 110 im Wesentlichen in Umlaufrichtung konstant ist, weisen die Außenmantelfläche 92 des Magnettopfs 46 und die Gehäusebohrung 100 geringe Rundlauf- und Passtoleranzen auf. Weiterhin müssen bei dieser Ausführungsform die Führungs- bzw. Zylinderachsen von der Ventilbohrung 2, der Gehäusebohrung 100 und dem Polring 110 vergleichsweise äußerst genau aufeinander abgestimmt sein.

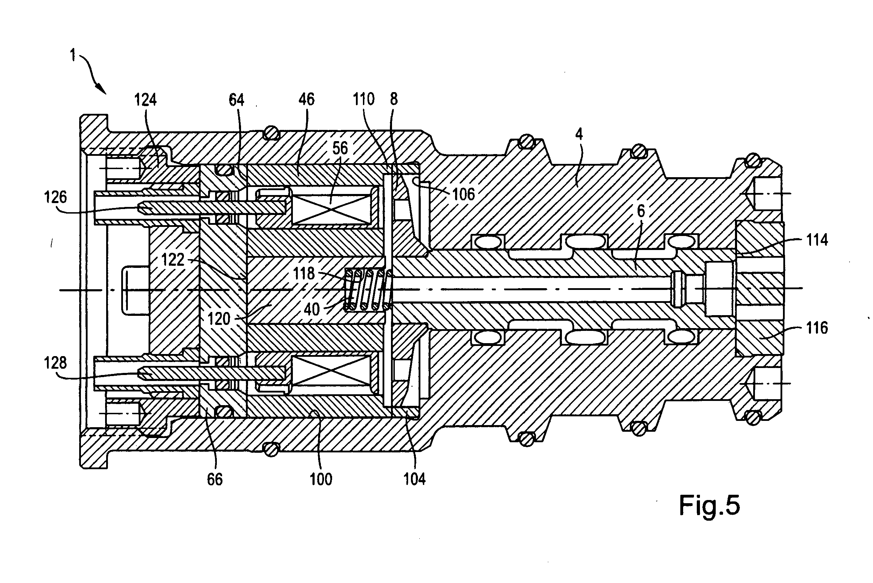

Figur 5 stellt das Magnetventil 1 gemäß einem vierten Ausführungsbeispiel dar. Hierbei ist ein gesamter Aufbau des Magnetventils 1 ersichtlich. Der Ventilschieber 6 stützt sich in seiner Grundstellung mit einer Ringsstirnfläche 114 an einer etwa koaxial in das Ventilgehäuse 4 eingeschraubten Anschlagsmutter 116 ab. Die Druckfeder 40 ist in dem Magnetventil 1 nicht wie in dem vorhergehenden Ausführungsbeispiel in einer Aufnahmebohrung 38 im Ventilschieber 6, siehe Figur 1, sondern in einer Aufnahmebohrung 118 eines Anschlagstifts 120 aufgenommen. Dieser ist etwa kreiszylindrisch ausgestaltet und stützt sich mit seiner vom Flachanker 8 abweisenden Stirnfläche 122 an der Dichtplatte 66 ab, an der sich ebenfalls der Magnettopf 46 mit seiner Stirnfläche 64 abstützt. Der Stützring 104, der Magnettopf 46 zusammen mit dem Polring 110 und die Dichtplatte 66 werden über einen das Ventilgehäuse 4 von links in der Figur 5 eingeschraubte Hohlschraube 124 gegen den Bohrungsgrund 106 der Gehäusebohrung 100 gespannt. Des weiteren sind bei dem Magnetventil 1 aus Figur 5 Kontaktstifte 126, 128 zur elektrischen Kontaktierung der Spule 56 gezeigt, die aus dem Magnettopf 46 in Längsrichtung auskragen, die Dichtplatte 66 durchsetzen und im Innenbereich der Hohlschraube 124 enden.

Offenbart ist ein Magnetventil mit einem Ventilgehäuse, in dem ein Ventilkörper beispielsweise ein Ventilstößel oder ein Ventilschieber, gleitend geführt ist. Mit dem Ventilkörper ist zumindest eine Druckmittelverbindung steuerbar. Der Ventilkörper ist mit einem Anker, insbesondere einem Flachanker, fest verbunden. Über den Flachanker ist der Ventilschieber von einem Hubmagneten betätigbar. Der Hubmagnet weist eine in einem Magnettopf aufgenommene Spule auf. Auf Seiten der dem Anker zuweisenden Stirnseite des Magnettopfs ist wenigstens ein zumindest abschnittsweise ringförmiges Element zum Bündeln des auf den Anker in Radial- und Axialrichtung wirksamen Magnetflusses angeordnet.

### Bezugszeichenliste

- 1: Magnetventil
- 2: Ventilbohrung
- 4: Ventilgehäuse
- 6: Ventilschieber
- 8: Flachanker
- 10: Hubmagnet
- 12, 14: Steuerkammer
- 16, 18: Sternbohrung
- 20: Endabschnitt
- 22: Gehäuseaussparung
- 24: Aufnahmestufe
- 26: Durchgangsbohrung
- 28: Ringstirnfläche
- 30: Ringfläche
- 32, 34: Stirnfläche
- 36: Durchgangsbohrung
- 38: Aufnahmebohrung
- 40: Druckfeder
- 42: Anschlagstift
- 44: Ringfläche
- 46: Magnettopf
- 48: Stirnseite
- 50: Spulenaufnahme
- 52: Längsachse
- 54: Kunststoffaufnahme
- 56: Spule
- 58: innere Polfläche
- 60: äußere Polfläche
- 62: Polring
- 64: Stirnfläche
- 65: Federelement
- 66: Dichtplatte
- 68: Aufnahmebohrung
- 70: Haltezapfen
- 72: O-Ring
- 74: Innenmantelfläche
- 76, 78: Ringfläche
- 80: Freistich
- 82: Außenmantelfläche
- 84: Ankerkante
- 86: Ringkante
- 88: axialer Luftspalt
- 90: radialer Luftspalt
- 92: Außenmantelfläche
- 94: Außenmantelfläche
- 96: Innenmantelfläche
- 98: Polring
- 100: Gehäusebohrung
- 102: Ringfläche
- 104: Stützring
- 106: Bohrungsgrund
- 108: Freistich
- 110: Polring
- 112: Stufe
- 114: Ringstirnfläche
- 116: Anschlagsmutter
- 118: Aufnahmebohrung
- 120: Anschlagstift
- 122: Stirnfläche
- 124: Hohlschraube
- 126, 128: Kontaktstifte

## Patentansprüche

1. Magnetventil mit einem Ventilgehäuse (4), in dem ein Ventilkörper (6), insbesondere ein Ventilschieber oder ein Ventilstößel, zum Steuern zumindest eine Druckmittelverbindung axial verschiebbar geführt ist, wobei der Ventilkörper (6) mit einem Anker (8), insbesondere einen Flachanker, verbunden ist, und wobei gegenüberliegend von einer Stirnfläche (32) des Ankers (8) ein Hubmagnet (10) mit einem eine Spule (56) aufweisenden Magnettopf (46) zum Beaufschlagen des Ankers (8) mit einer Magnetkraft angeordnet ist, **dadurch gekennzeichnet, dass** ein zumindest abschnittsweise ringförmiges Element (62; 98; 110) auf Seiten einer dem Anker (8) zuweisenden Stirnseite (48) des Magnettopfs (46) zum Bündeln des an den Anker (8) übertragenen Magnetflusses angeordnet ist.

2. Magnetventil nach Anspruch 1, wobei das zumindest abschnittweise ringförmige Element (62; 98; 110) ein etwa koaxial zum Anker (8) angeordneter Polring (62, 98, 110) ist.

3. Magnetventil nach Anspruch 2, wobei ein Außendurchmesser des Ankers (8) geringer als ein Innendurchmesser des Polrings (62, 98, 110) ist, und der Anker (8) bei einer Hubbewegung in Richtung des Magnettopfs (46) zumindest abschnittsweise in dem Polring (62, 98, 110) eintaucht.

4. Magnetventil nach Anspruch 2 oder 3, wobei der Polring (62; 98) eine etwa kreiszylinderförmige Innenmantelfläche (74) und zwei sich etwa senkrecht dazu erstreckende Ringflächen (76, 78) aufweist.

5. Magnetventil nach Anspruch 4, wobei die vom Magnettopf (46) abweisende Ringfläche (78) des Polrings (62; 98; 110) und der dem Magnettopf (46) zuweisende Stirnfläche (32) des Ankers (8) in einer Grundstellung des Ventilschiebers (6) etwa in einer gemeinsamen Ebene angeordnet sind.

6. Magnetventil nach einem der vorhergehenden Ansprüche, wobei die dem Hubmagneten (10) gegenüberliegende Stirnfläche (32) des Ankers (8) vom Ventilkörper (6) abweisend angeordnet ist.

7. Magnetventil nach einem der Ansprüche 2 bis 6, wobei der Polring (62) als Radialvorsprung an einer den Hubmagneten (10) und den Anker (8) aufnehmenden Gehäuseaussparung (22) einstückig mit dem Ventilgehäuse (4) ausgebildet ist.

8. Magnetventil nach Anspruch 7, wobei das Ventilgehäuse (4) aus einem ferromagnetischen Material besteht.

9. Magnetventil nach einem der Ansprüche 1 bis 6, wobei der Polring (98) in einer den Hubmagneten (10) und den Anker (8) aufnehmenden Gehäusebohrung (100) des Ventilgehäuses (4) zwischen einem Gehäuseboden (106) und der Stirnseite (48) des Magnettopfs (46) angeordnet ist.

10. Magnetventil nach einem der vorhergehenden Ansprüche, wobei sich der Magnettopf (46) an der Ringfläche (76; 110) des Polrings (62; 98) mit der zum Anker (8) weisenden Stirnseite (48) abstützt.

11. Magnetventil nach einem der Ansprüche 1 bis 6, wobei der Polring (110) als Topfvorsprung an der zum Anker (8) weisenden Stirnseite (48) des Magnettopfs (46) ausgebildet ist.

12. Magnetventil nach einem der vorhergehenden Ansprüche, wobei der Magnettopf (46) auf seiner vom Anker (8) abweisenden Stirnfläche (64) mit einer Federkraft eines sich an einem Gehäusedeckel oder an einer Dichtplatte (66) abstützenden Federelements (65) etwa in seiner Längsrichtung hin zum Anker (8) beaufschlagt ist.

## Claims

1. Solenoid valve having a valve housing (4) in which a valve body (6), in particular a valve slide or a valve tappet, for controlling at least one pressure medium connection is routed in an axially displaceable manner, wherein the valve body (6) is connected to an armature (8), in particular a flat armature, and wherein a lifting magnet (10) having a magnet pot (46), which has a coil (56), for applying a magnetic force to the armature (8) is arranged opposite an end face (32) of the armature (8), **characterized in that** an element (62; 98; 110) which is annular at least in sections is arranged on sides of an end face (48), which faces the armature (8), of the magnet pot (46) for focussing the magnetic flux which is transmitted to the armature (8).

2. Solenoid valve according to Claim 1, wherein the element (62; 98; 110) which is annular at least in sections is a pole ring (62, 98, 110) which is arranged approximately coaxially to the armature (8).

3. Solenoid valve according to Claim 2, wherein an outside diameter of the armature (8) is smaller than an inside diameter of the pole ring (62, 98, 110), and the armature (8), at least in sections, enters the pole ring (62, 98, 110) in the event of a lifting movement in the direction of the magnet pot (46).

4. Solenoid valve according to Claim 2 or 3, wherein the pole ring (62; 98) has an approximately circular-cylindrical inner casing surface (74) and two annular surfaces (76, 78) which extend approximately perpendicular to the said inner casing surface.

5. Solenoid valve according to Claim 4, wherein the annular surface (78), which is averted from the magnet pot (46), of the pole ring (62; 98; 110) and the end face (32), which faces the magnet pot (46), of the armature (8) are arranged approximately in a common plane in a home position of the valve slide (6).

6. Solenoid valve according to one of the preceding claims, wherein the end face (32), which is situated opposite the lifting magnet (10), of the armature (8) is arranged such that it is averted from the valve body (6).

7. Solenoid valve according to one of Claims 2 to 6, wherein the pole ring (62) is integrally formed with the valve housing (4) as a radial projection from a housing cutout (22) which accommodates the lifting magnet (10) and the armature (8).

8. Solenoid valve according to Claim 7, wherein the valve housing (4) is composed of a ferromagnetic material.

9. Solenoid valve according to one of Claims 1 to 6, wherein the pole ring (98) is arranged in a housing bore (100), which accommodates the lifting magnet (10) and the armature (8), in the valve housing (4) between a housing base (106) and the end face (48) of the magnet pot (46).

10. Solenoid valve according to one of the preceding claims, wherein the magnet pot (46) is supported on the annular surface (76; 110) of the pole ring (62; 98) by way of the end face (48) which faces the armature (8).

11. Solenoid valve according to one of Claims 1 to 6, wherein the pole ring (110) is in the form of a pot projection from the end face (48), which faces the armature (8), of the magnet pot (46).

12. Solenoid valve according to one of the preceding claims, wherein a spring force of a spring element (65), which is supported on a housing cover or on a sealing plate (66), is applied to the magnet pot (46) on its end face (64), which is averted from the armature (8), approximately in the longitudinal direction of the said magnet pot in the direction of the armature (8).

## Revendications

1. Soupape magnétique comprenant un boîtier de soupape (4), dans lequel est guidé de manière déplaçable axialement un corps de soupape (6), en particulier un coulisseau de soupape ou un poussoir de soupape, pour commander au moins une connexion de fluide sous pression, le corps de soupape (6) étant connecté à un induit (8), en particulier un induit plat, et en face d'une surface frontale (32) de l'induit (8) étant disposé un aimant de levage (10) avec un pot magnétique (46) présentant une bobine (56) pour solliciter l'induit (8) avec une force magnétique, **caractérisée en ce qu'**un élément au moins en partie annulaire (62 ; 98 ; 110) est disposé du côté d'un côté frontal (48) du pot magnétique (46) tourné vers l'induit (8) pour focaliser le flux magnétique transmis à l'induit (8).

2. Soupape magnétique selon la revendication 1, dans laquelle l'élément au moins en partie annulaire (62 ; 98 ; 110) est un anneau polaire (62, 98, 110) disposé approximativement coaxialement par rapport à l'induit (8).

3. Soupape magnétique selon la revendication 2, dans laquelle un diamètre extérieur de l'induit (8) est inférieur à un diamètre intérieur de l'anneau polaire (62, 98, 110), et l'induit (8), dans le cas d'un mouvement de levage dans la direction du pot magnétique (46), plonge au moins en partie dans l'anneau polaire (62, 98, 110).

4. Soupape magnétique selon la revendication 2 ou 3, dans laquelle l'anneau polaire (62 ; 98) présente une surface d'enveloppe interne (74) approximativement cylindrique circulaire et deux surfaces annulaires (76, 78) s'étendant approximativement perpendiculairement à celle-ci.

5. Soupape magnétique selon la revendication 4, dans laquelle la surface annulaire (78) de l'anneau polaire (62 ; 98 ; 110) opposée au pot magnétique (46) et de la surface frontale (32) de l'induit (8) tournée vers le pot magnétique (46) sont disposées dans une position de base du coulisseau de soupape (6) approximativement dans un plan commun.

6. Soupape magnétique selon l'une quelconque des revendications précédentes, dans laquelle la surface frontale (32) de l'induit (8) opposée à l'aimant de levage (10) est disposée de manière tournée à l'opposé du corps de soupape (6).

7. Soupape magnétique selon l'une quelconque des revendications 2 à 6, dans laquelle l'anneau polaire (62) est réalisé d'une seule pièce avec le boîtier de soupape (4) sous forme de saillie radiale au niveau d'un évidement du boîtier (22) recevant l'aimant de levage (10) et l'induit (8).

8. Soupape magnétique selon la revendication 7, dans laquelle le boîtier de soupape (4) se compose d'un matériau ferromagnétique.

9. Soupape magnétique selon l'une quelconque des revendications 1 à 6, dans laquelle l'anneau polaire (98) est disposé dans un alésage de boîtier (100) du boîtier de soupape (4) recevant l'aimant de levage (10) et l'induit (8) entre un fond de boîtier (106) et le côté frontal (38) du pot magnétique (46).

10. Soupape magnétique selon l'une quelconque des revendications précédentes, dans laquelle le pot magnétique (46) s'appuie sur la surface annulaire (76 ; 110) de l'anneau polaire (62 ; 98) avec le côté frontal (48) tourné vers l'induit (8).

11. Soupape magnétique selon l'une quelconque des revendications 1 à 6, dans laquelle l'anneau polaire (110) est réalisé sous forme de saillie de pot sur le côté frontal (48) du pot magnétique (46) tourné vers l'induit (8).

12. Soupape magnétique selon l'une quelconque des revendications précédentes, dans laquelle le pot magnétique (46) est sollicité approximativement dans sa direction longitudinale vers l'induit (8) sur sa surface frontale (64) tournée à l'opposé de l'induit (8) avec une force de ressort d'un élément de ressort (65) s'appuyant sur un couvercle de boîtier ou sur une plaque d'étanchéité (66).
